# FASCICULE DE BREVET EUROPEEN

(11) **EP 2 435 163 B1**
(45) Date de publication et mention de la délivrance du brevet: **10.10.2018**
(21) Numéro de dépôt: 10728771.6
(22) Date de dépôt: 18.05.2010
(51) Int. Cl.: B01D 53/56, B01D 53/86, B01D 53/75

(54) **EPURATION D'UN GAZ CONTENANT DES OXYDES D'AZOTE**
REINIGUNG EINES STICKOXIDHALTIGEN GASES
PURIFYING A GAS CONTAINING NITROGEN OXIDES

(30) Priorité: 29.05.2009 FR 0953546
(43) Date de publication de la demande: 04.04.2012
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); GRANADOS, Ludovic, F-92800 Puteaux (FR); MONEREAU, Christian, F-75011 Paris (FR); RENOU, Elise, F-92370 Chaville (FR)
(86) Numéro de dépôt international: PCT/FR2010/050952
(87) Numéro de publication internationale: WO 2010/136698

(56) Documents cités:
- EP-A- 1 147 801
- DE-A1- 4 216 772
- FR-A- 2 282 404
- US-A- 4 824 646

## Description

La présente invention se rapporte à un procédé de purification d'un flux gazeux comprenant du monoxyde d'azote NO et des oxydes d'azote NOx par une unité de purification avec conversion du monoxyde d'azote sur lit catalytique, préalablement à ladite purification.

Les oxydes d'azote (NOx) sont des polluants généralement émis lors de la combustion de combustibles fossiles. Les NOx dans l'atmosphère créent de l'ozone troposphérique, qui est toxique lorsqu'il est inhalé. De plus, les NOx contribuent à la formation des pluies acides, ce qui est préjudiciable à la vie végétale et animale, ainsi que des biens.

Lors des étapes de traitement et de purification, notamment de la compression (suivie d'une réfrigération), les NOx vont générer des condensats acides, notamment : acide nitrique, nitreux, ...

Il est donc préférable de mettre en oeuvre un procédé de lavage des fumées permettant d'éliminer une partie de ces impuretés en amont d'autres étapes de purification des fumées.

L'arrêt des oxydes d'azote peut être réalisé en utilisant :
- une colonne de lavage basse pression avec additif chimique ou non, ou
- une colonne de lavage à l'eau, de préférence sous pression, ou
- la séparation cryogénique, en distillant les fumées de combustion riches en CO₂ comprenant des oxydes d'azote (NOx) où les oxydes d'azote dont l'oxydation est supérieure à celle du NO sont séparés des fumées.

En particulier, deux types de procédés sont disponibles pour le traitement des NOx: la réduction sélective non catalytique (SNCR) et la réduction sélective catalytique (SCR). Tous deux utilisent l'ammoniac (ou un dérivé comme l'urée) pour réduire les oxydes d'azote en azote moléculaire. La différence entre ces deux procédés étant le catalyseur : il réduit la température opératoire et la consommation de réactif, il augmente le coût d'investissement, mais il élève aussi sensiblement l'efficacité

Le procédé SNCR est caractérisé par :
- des températures opératoires élevées : entre 850 et 1050°C (selon utilisation d'additifs ou non et le rapport NH/NO initial) ;
- un taux maximum de dénitrification théorique de 90% mais dans la pratique, on observe une efficacité entre 40 et 65%.
- une possible augmentation des émissions de protoxyde d'azote, de CO et d'ammoniac (compte tenu de l'utilisation d'ammoniac comme réactif).

Le procédé SCR est caractérisé par :
- l'utilisation d'ammoniac ou d'urée mélangé à de l'air. Le gaz chargé de NH₃ traverse ensuite un catalyseur à plusieurs lits dans une plage de températures comprises entre 250 et 380°C. Les catalyseurs les plus souvent utilisés sont des oxydes métalliques sur support TiO₂ ou Al₂O₃.
- un taux de réduction élevé, souvent supérieur à 90%,
- une température opératoire d'autant plus élevée que la quantité initiale en SO₂ est importante dans le gaz à traiter (entre 170°C et 540°C).
- des coûts d'investissement assez élevés.

Cependant, dans chacun des procédés de l'état de la technique, les oxydes d'azote sous forme de monoxyde d'azote NO ne sont pas arrêtés et peuvent ainsi tout au long du procédé continuer leur conversion lente vers une forme plus oxydée causant des problèmes dans le procédé aval. En effet, les NOx peuvent conduire, en milieu fortement concentré en eau (voir saturé) comme dans le cas d'un gaz produit par une combustion, à la génération d'acides forts (nitrique essentiellement) capables d'induire des problèmes importants de tenue des matériaux utilisés (corrosion par exemple). Ceci est d'autant plus marqué lorsque les conditions du gaz (température et pression) sont modifiées, par exemple lorsque ce gaz sera comprimé en vue d'une utilisation ultérieure (purification supplémentaire par adsorption par exemple...).

Le document FR2282404 divulgue un procédé pour éliminer le monoxyde d'azote NO et les oxydes d'azote NOx d'un flux gazeux comprenant :
- la conversion du NO en NOx dans un lit catalytique à une température entre 50 et 140°C, et
- l'abattement des NOx dans une unité de lavage.

Partant de là, un problème qui se pose est de fournir un procédé amélioré de purification d'un flux gazeux comprenant du monoxyde d'azote NO et des oxydes d'azote NOx avec x> 1.

Une solution de l'invention est un dispositif pour éliminer le monoxyde d'azote NO et les oxydes d'azote NOx avec x >1 d'un flux gazeux comprenant :
- un lit catalytique permettant la conversion d'au moins une partie du NO en NOx avec x >1, et
- une unité d'abattement des NOx avec x >1,
le lit catalytique étant situé en amont de l'unité d'abattement et l'unité d'abattement étant une unité de séparation cryogénique,
avec le lit catalytique étant un lit de charbon actif dopé au soufre.
De préférence, le lit catalytique permet la conversion d'au moins 60% du NO en NOx avec x >1, de préférence d'au moins 80 %, plus préférentiellement d'au moins 90%.

Selon, une variante de l'invention le dispositif selon l'invention est un dispositif pour éliminer le monoxyde d'azote NO et les oxydes d'azote NOx avec x >1 d'un flux gazeux comprenant :
- un lit catalytique permettant la conversion d'au moins une partie du NO en NOx avec x >1, et
- une unité d'abattement des NOx avec x >1,
le lit catalytique étant situé en amont de l'unité d'abattement et l'unité d'abattement étant une unité de séparation cryogénique,
avec le lit catalytique est un lit d'alumine dopée au soufre.
De préférence, le lit catalytique permet la conversion d'au moins 60% du NO en NOx avec x >1, de préférence d'au moins 80 %, plus préférentiellement d'au moins 90%.

La présente invention a également pour objet un procédé pour éliminer le monoxyde d'azote NO et les oxydes d'azote NOx avec x >1 d'un flux gazeux, mettant en oeuvre un dispositif selon l'invention et dans lequel, le flux gazeux est mis en contact avec le lit catalytique de manière à convertir au moins une partie du NO en NOx avec x >1 avant d'entrer dans l'unité d'abattement des NOx avec x >1.
Le taux de conversion du monoxyde d'azote est compris entre 25 et 100%, de préférence entre 50 et 100% de conversion, plus préférentiellement entre 80 et 100%.

Selon le cas le procédé selon l'invention peut présenter l'une ou l'autre des caractéristiques suivantes :
- le flux gazeux est un flux de fumées de combustion.
- la conversion du NO en NOx avec x > 1 est réalisée à une température comprise entre 5 et 150°C et/ou à une pression comprise entre 1.3 et 100 bar.
- le temps de contact du flux gazeux avec le lit catalytique est inférieur à 120 secondes, de préférence inférieur à 40 secondes.
Par temps de contact, on entend le ratio du volume du lit catalytique sur le débit volumique du flux gazeux à purifier.

Le lit catalytique associé à l'unité d'abattement des NOx permet d'arrêter les oxydes d'azote aussi bien sous forme de NO que sous forme de NOx(x>1).

En effet, le gaz sera d'autant plus purifié de son contenu en oxyde d'azote que la conversion NO vers NOx (x>1) aura été avancée en amont de l'unité d'abattement des NOx. Et l'élimination des NOx du gaz sera d'autant plus incomplète que la quantité de monoxyde d'azote en entrée de l'unité d'abattement des NOx sera grande.

Enfin si le flux gazeux comprend du mercure, l'utilisation d'un lit de charbon actif dopé au soufre ou d'un lit d'alumine dopée au soufre permet :
- de convertir le NO en NOx (x > 1), et
- d'arrêter le mercure.

L'invention va être décrite de manière plus précise à l'aide de l'exemple ci-dessous.

Un mélange contenant 95% de CO₂ et 5% d'oxygène, artificiellement pollué avec 1500 ppm de NO, est mis en contact avec un lit catalytique de 150 cm³ composé de particules de charbon actif dopé au soufre, à une pression de 5 bar et une température de 120°C et avec un débit de 15 NL/min.

La composition du gaz à la sortie du lit catalytique est mesurée et le taux de conversion du NO en NO₂ obtenu est de 66%.

De même que dans l'exemple 1, le NO₂ formé pourra être retiré du flux gazeux par une unité d'abattement des NOx.

Dans le cas présent si on utilise en aval une unité de séparation cryogénique, on observe un taux d'abattement total du NO et des NOx présents dans le mélange initial d'environ 83 %.

## Revendications

1. Dispositif pour éliminer le monoxyde d'azote NO et les oxydes d'azote NOx avec x >1 d'un flux gazeux comprenant :
- un lit catalytique permettant la conversion d'au moins une partie du NO en NOx avec x >1, et
- une unité d'abattement des NOx avec x >1,
le lit catalytique étant situé en amont de l'unité d'abattement et l'unité d'abattement étant une unité de séparation cryogénique,
avec le lit catalytique étant un lit de charbon actif dopé au soufre.

2. Dispositif selon la revendication 1, **caractérisé en ce que** le lit catalytique permet la conversion d'au moins 60% du NO en NOx avec x >1, de préférence d'au moins 80 %, plus préférentiellement d'au moins 90%.

3. Dispositif pour éliminer le monoxyde d'azote NO et les oxydes d'azote NOx avec x >1 d'un flux gazeux comprenant :
- un lit catalytique permettant la conversion d'au moins une partie du NO en NOx avec x >1, et
- une unité d'abattement des NOx avec x >1,
le lit catalytique étant situé en amont de l'unité d'abattement et l'unité d'abattement étant une unité de séparation cryogénique,
avec le lit catalytique est un lit d'alumine dopée au soufre.

4. Dispositif selon la revendication 3, **caractérisé en ce que** le lit catalytique permet la conversion d'au moins 60% du NO en NOx avec x >1, de préférence d'au moins 80 %, plus préférentiellement d'au moins 90%.

5. Procédé pour éliminer le monoxyde d'azote NO et les oxydes d'azote NOx avec x >1 d'un flux gazeux, mettant en oeuvre un dispositif selon l'une des revendications 1 à 4 et dans lequel, le flux gazeux est mis en contact avec le lit catalytique de manière à convertir au moins une partie du NO en NOx avec x >1 avant d'entrer dans l'unité d'abattement des NOx avec x >1.

6. Procédé selon la revendication 5, **caractérisé en ce que** le flux gazeux est un flux de fumées de combustion.

7. Procédé selon l'une des revendications 5 ou 6, **caractérisé en ce que** la conversion du NO en NOx avec x > 1 est réalisée à une température comprise entre 5 et 150°C et/ou à une pression comprise entre 1.3 et 100 bar.

8. Procédé selon l'une des revendications 5 à 7, **caractérisé en ce que** le temps de contact du flux gazeux avec le lit catalytique est inférieur à 120 secondes, de préférence inférieur à 40 secondes.

## Patentansprüche

1. Vorrichtung zur Entfernung von Stickstoffmonoxid NO und Stickstoffoxiden NOx mit x > 1 aus einem Gasstrom, umfassend:
- ein katalytisches Bett zur Umwandlung mindestens eines Teils des NO in NOx mit x > 1, und
- eine NOx-Reduktionseinheit mit x > 1,
wobei das katalytische Bett vor der Reduktionseinheit angeordnet ist und die Reduktionseinheit eine kryogene Trenneinheit ist, wobei das katalytische Bett ein schwefeldotiertes Aktivkohlebett ist.

2. Vorrichtung nach Anspruch 1, **dadurch gekennzeichnet, dass** das katalytische Bett die Umwandlung von mindestens 60 % NO in NOx mit x > 1, vorzugsweise von mindestens 80 %, mehr bevorzugt von mindestens 90 % ermöglicht.

3. Vorrichtung zur Entfernung von Stickstoffmonoxid NO und Stickstoffoxiden NOx mit x > 1 aus einem Gasstrom, umfassend:
- ein katalytisches Bett zur Umwandlung mindestens eines Teils des NO in NOx mit x > 1, und
- eine NOx-Reduktionseinheit mit x > 1,
wobei das katalytische Bett vor der Reduktionseinheit angeordnet ist und die Reduktionseinheit eine kryogene Trenneinheit ist, wobei das katalytische Bett ein schwefeldotiertes Aluminiumoxidbett ist.

4. Vorrichtung nach Anspruch 3, **dadurch gekennzeichnet, dass** das katalytische Bett die Umwandlung von mindestens 60 % NO in NOx mit x > 1, vorzugsweise von mindestens 80 %, mehr bevorzugt von mindestens 90 % ermöglicht.

5. Verfahren zur Entfernung von Stickstoffmonoxid NO und Stickstoffoxiden NOx mit x > 1 aus einem Gasstrom unter Verwendung einer Vorrichtung nach einem der Ansprüche 1 bis 4 und wobei der Gasstrom mit dem katalytischen Bett in Kontakt gebracht wird, um mindestens einen Teil des NO in NOx mit x > 1 umzuwandeln, bevor er in die NOx-Reduktionseinheit mit x > 1 gelangt.

6. Verfahren nach Anspruch 5, **dadurch gekennzeichnet, dass** der Gasstrom ein Strom von Verbrennungsdämpfen ist.

7. Verfahren nach einem der Ansprüche 5 oder 6, **dadurch gekennzeichnet, dass** die Umwandlung von NO in NOx mit x > 1 bei einer Temperatur zwischen 5 und 150°C und/oder bei einem Druck zwischen 1,3 und 100 bar durchgeführt wird.

8. Verfahren nach einem der Ansprüche 5 bis 7, **dadurch gekennzeichnet, dass** die Kontaktzeit des Gasstroms mit dem katalytischen Bett weniger als 120 Sekunden, vorzugsweise weniger als 40 Sekunden, beträgt.

## Claims

1. Device for removing nitrogen monoxide NO and nitrogen oxides NOx with x>1 from a gaseous flow comprising:
- a catalytic bed enabling the conversion of at least one part of the NO into NOx with x>1, and
- an abatement unit for the NOx with x>1,
the catalytic bed being situated upstream of the abatement unit and the abatement unit being a cryogenic separation unit,
with the catalytic bed being an active carbon bed doped with sulphur.

2. Device according to claim 1, **characterised in that** the catalytic bed enables the conversion of at least 60% of the NO into NOx with x>1, preferably at least 80%, more preferably at least 90%.

3. Device for removing nitrogen monoxide NO and nitrogen oxides NOx with x>1 from a gaseous flow comprising:
- a catalytic bed enabling the conversion of at least one part of the NO into NOx with x>1, and
- an abatement unit for the NOx with x>1,
the catalytic bed being situated upstream of the abatement unit and the abatement unit being a cryogenic separation unit,
with the catalytic bed being an active alumina bed doped with sulphur.

4. Device according to claim 3, **characterised in that** the catalytic bed enables the conversion of at least 60% of the NO into NOx with x>1, preferably at least 80%, more preferably at least 90%.

5. Method for removing nitrogen monoxide NO and nitrogen oxides NOx with x>1 from a gaseous flow, implementing a device according to one of claims 1 to 4, and wherein, the gaseous flow is put in contact with the catalytic bed so as to convert at least one part of the NO into NOx with x>1 before entering into the abatement unit of the NOx with x>1.

6. Method according to claim 5, **characterised in that** the gaseous flow is a combustion fume flow.

7. Method according to one of claims 5 or 6, **characterised in that** the conversion of the NO into NOx with x>1 is done at a temperature of between 5 and 150°C and/or at a pressure of between 1.3 and 100 bar.

8. Method according to one of claims 5 to 7, **characterised in that** the contact time of the gaseous flow with the catalytic bed is less than 120 seconds, preferably less than 40 seconds.
